# EUROPEAN PATENT APPLICATION

(11) **EP 2 640 060 A1**
(43) Date of publication of application: **18.09.2013**
(21) Application number: 12159952.6
(22) Date of filing: 16.03.2012
(51) Int. Cl.: H04N 5/232, H04N 13/00, H04N 5/262, H04N 5/225, H04N 5/235

(54) **Methods and devices for producing an enhanced image**

(71) Applicant: BlackBerry Limited, Waterloo ON N2L 3W8 (CA)
(72) Inventor: Hong, Sung Ho, Waterloo, Ontario N2L 3W8 (CA); Daigle, Joshua Lucien, Waterloo, Ontario N2L 3W8 (CA); Jaffrain, Gael, Waterloo, Ontario N2L 3W8 (CA)
(74) Representative: Patel, Binesh

(57) **Abstract**

Methods and devices for producing an enhanced image are described. In one example aspect, a method includes: providing a three-dimensional operating mode in which stereoscopic images are obtained using a first camera and a second camera; and providing a two-dimensional operating mode and while operating within the two-dimensional operating mode: receiving substantially simultaneously captured two-dimensional images from the first camera and the second camera; and merging the two-dimensional images to produce an enhanced two-dimensional image.

## Description

### TECHNICAL FIELD

The present disclosure relates to image manipulation, and more particularly, to methods and electronic devices for producing an enhanced two-dimensional image using cameras that may be used to produce three-dimensional images.

### BACKGROUND

Electronic devices such as smartphones and tablet computers may be equipped with an application to manipulate images. For example, an image editing application may allow a user to manipulate an image by changing properties associated with the image. The image editing application may, for example, allow a user to modify the visual properties of the image by removing portions of the image, by changing the colour of portions of the image, by adding graphics to the image, by merging the image with another image, etc.

The image editing application provides a user with a tool to manipulate the image in order to improve the aesthetic features of the image. For example, a user may crop a portion of the image and/or increase the level of blur associated with a background in the image by blurring the background. Such functions are often performed manually by the user utilizing the image editing application in order to improve the aesthetic features of the image. This can be a tedious and time consuming process.

### BRIEF DESCRIPTION OF THE DRAWINGS

Reference will now be made, by way of example, to the accompanying drawings which show an embodiment of the present application, and in which:

FIG. 1 is a block diagram illustrating an example electronic device in accordance with example embodiments of the present disclosure;

FIG. 2 is a front view of an example smartphone in accordance with example embodiments of the present disclosure;

FIG. 3 is a rear view of the example smartphone of FIG. 2;

FIG. 4 is a flowchart illustrating an example method of producing an enhanced two-dimensional image in accordance with example embodiments of the present disclosure;

FIG. 5 is a flowchart illustrating another example method of producing an enhanced two-dimensional image in accordance with example embodiments of the present disclosure;

FIG. 6 is a flowchart illustrating another example method of producing an enhanced two-dimensional image in accordance with example embodiments of the present disclosure;

FIG. 7 is a flowchart illustrating a further example method of producing an enhanced two-dimensional image in accordance with example embodiments of the present disclosure; and

FIG. 8 is a flowchart illustrating a further example method of producing an enhanced two-dimensional image in accordance with example embodiments of the present disclosure.

Like reference numerals are used in the drawings to denote like elements and features.

### DETAILED DESCRIPTION OF EXAMPLE EMBODIMENTS

In one example aspect, the present application describes a method implemented by a processor of an electronic device. The method includes: providing a three-dimensional operating mode in which stereoscopic images are obtained using a first camera and a second camera; and providing a two-dimensional operating mode and while operating within the two-dimensional operating mode: receiving substantially simultaneously captured two-dimensional images from the first camera and the second camera; and merging the two-dimensional images to produce an enhanced two-dimensional image.

In another example aspect, the present application describes an electronic device. The electronic device includes a memory, a display, a first camera, a second camera. The electronic device also includes a processor coupled with the memory, the display, the first camera and the second camera. The processor is configured to: provide a three-dimensional operating mode in which stereoscopic images are obtained using a first camera and a second camera; and provide a two-dimensional operating mode and while operating within the two-dimensional operating mode: receive substantially simultaneously captured two-dimensional images from the first camera and the second camera; and merge the two-dimensional images to produce an enhanced two-dimensional image.

In yet another example aspect, the present application describes a computer readable storage medium. The computer readable storage medium includes computer executable instructions. The computer executable instructions include instructions for: providing a three-dimensional operating mode in which stereoscopic images are obtained using a first camera and a second camera; and providing a two-dimensional operating mode and while operating within the two-dimensional operating mode: receiving substantially simultaneously captured two-dimensional images from the first camera and the second camera; and merging the two-dimensional images to produce an enhanced two-dimensional image.

Other example embodiments of the present disclosure will be apparent to those of ordinary skill in the art from a review of the following detailed description in conjunction with the drawings.

Example embodiments of the present disclosure are not limited to any particular operating system, electronic device architecture, server architecture or computer programming language.

### Example Electronic Device

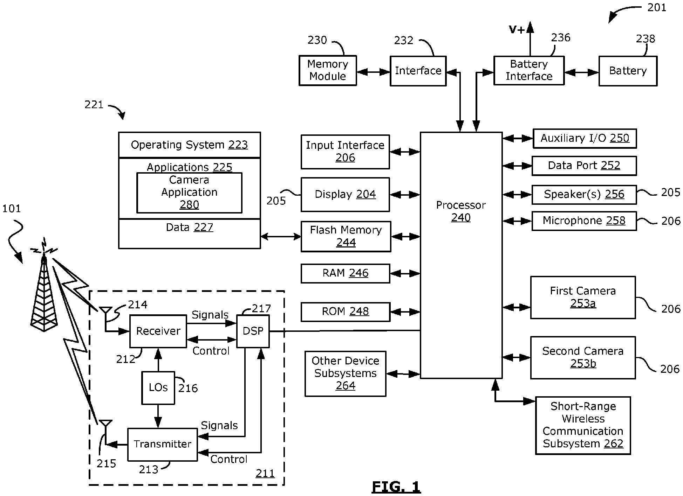

Reference is first made to FIG. 1 which illustrates an example electronic device 201 in which example embodiments described in the present disclosure can be applied. In the example embodiment illustrated, the electronic device 201 is a mobile communication device. That is, the electronic device 201 is configured to communicate with other electronic devices, servers and/or systems (i.e. it is a "communication" device) and the electronic device 201 is portable and may be easily moved between different physical locations (i.e. it is a "mobile" device). However, in other example embodiments, the electronic device 201 may not be portable (i.e. may not be a "mobile" device) and/or may not be configured to communicate with other systems (i.e. may not be a "communication" device).

Depending on the functionality provided by the electronic device 201, in various example embodiments the electronic device 201 may be a multiple-mode communication device configured for both data and voice communication, a mobile telephone such as a smartphone, a wearable computer such as a watch, a tablet computer such as a slate computer, a personal digital assistant (PDA), or a computer system. The electronic device 201 may take other forms apart from those specifically listed above. The electronic device 201 may also, in various example embodiments, be referred to as a mobile communications device, a communication device, a mobile device, an electronic device and, in some cases, as a device.

The electronic device 201 includes a controller including at least one processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 may be communicably coupled with additional device subsystems including one or more output interfaces 205 (such as a display 204 and/or a speaker 256), one or more input interfaces 206 (such as a first camera 253a, a second camera 253b, a microphone 258, a keyboard (not shown), control buttons (not shown), a touch-sensitive overlay (not shown) associated with a touchscreen display and/or other input interfaces 206), memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a short-range wireless communication subsystem 262 and other device subsystems generally designated as 264. Some of the subsystems shown in FIG. 1 perform communication-related functions, whereas other subsystems may provide "resident" or on-device functions.

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller.

The electronic device 201 may include a communication subsystem 211 which allows the electronic device 201 to communicate over a wireless network 101. The communication subsystem 211 includes a receiver 212, a transmitter 213, and associated components, such as one or more antenna elements 214, 215, local oscillators (LOs) 216, and a processing module such as a digital signal processor (DSP) 217. The antenna elements 214, 215 may be embedded or internal to the electronic device 201 and a single antenna may be shared by both receiver 212 and transmitter 213. The particular design of the wireless communication subsystem 211 depends on the wireless network 101 in which the electronic device 201 is intended to operate.

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver 212 and transmitter 213 control. For example, the gains applied to communication signals in the receiver 212 and the transmitter 213 may be adaptively controlled through automatic gain control algorithms implemented in the DSP 217.

In at least some example embodiments, the auxiliary input/output (I/O) subsystems 250 may include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In at least some example embodiments, the electronic device 201 also includes a removable memory module 230 (which may be flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

The electronic device 201 includes a first camera 253a and a second camera 253b. The cameras 253a, 253b are capable of capturing camera data, such as images, in the form of still photo and/or motion data. The camera data may be captured in the form of an electronic signal which is produced by an image sensor associated with each of the cameras 253a, 253b. The cameras 253a, 253b may, in at least one operating mode, be collectively capable of capturing stereoscopic images for display. That is, the cameras 253a, 253b may collectively produce stereoscopic image data which defines a stereoscopic image. Stereoscopic images may provide an illusion of depth in the images to a user (i.e. three dimensional (3-D) images).

To produce stereoscopic image data, the cameras 253a, 253b are oriented in generally the same direction. For example, as will be discussed below, in at least some example embodiments, the cameras 253a, 253b may both be rear-facing. That is, the cameras 253a, 253b are, in some example embodiments, both arranged to capture an image of a subject on a rear side of the electronic device 201.

The first camera 253a and the second camera 253b are mounted in spaced relation to one another. That is, there may be a space between the cameras 253a, 253b to allow the first camera 253a and the second camera 253b to capture stereoscopic images. The distance between the cameras 253a, 253b may be approximately the same as the distance between a standard person's eyes (which is around 6.35 cm). In at least some example embodiments, the distance between the cameras 253a, 253b may be smaller or larger than the distance between a person's eyes. A larger distance between the cameras 253a, 253b may allow for capturing stereoscopic images that produces an enhanced effect of stereoscopy for a user.

Since the cameras 253a, 253b are offset from one another, so too are the images which they produce. That is, an image captured by the first camera 253a is offset from the image captured by the second camera 253b. The image from the first camera 253a is captured at a different position than the image from the second camera 253b due to the positioning of the first camera 253a and the second camera 253b. The offset between the images is defined by the distance (referred to as the intra-axial distance) between the first camera 253a and the second camera 253b.

Accordingly, stereoscopic image data may be produced by the cameras 253a, 253b. Such stereoscopic image data includes images produced using the first camera 253a, and images produced using the second camera 253b. The images may be captured at the same time or approximately the same time, but may be offset in appearance due to the spacing between the cameras 253a, 253b.

In at least some example embodiments, the cameras 253a, 253b may be capable of capturing non-stereoscopic images (i.e. two-dimensional (2-D) images). In some example embodiments, in at least one operating mode, camera data obtained from both of the cameras 253a, 253b may be used to produce a single 2-D image. For example, the first camera 253a and the second camera 253b may capture 2-D images at the same time or approximately the same time, and the captured 2-D images may be merged to produce an enhanced 2-D image.

The cameras 253a, 253b may both be configured as front facing cameras or may both be configured as rear facing cameras. Front facing cameras are provided by cameras 253a, 253b which are located to obtain images near a front face of the electronic device 201. The front face is typically the face on which a main display 204 is mounted. That is, when front facing cameras are provided on the electronic device 201, the display 204 is configured to display content which may be viewed from a side of the electronic device 201 where the cameras 253a, 253b are directed.

The front facing cameras may be located above or below the display 204. In at least some example embodiments, the front facing cameras 253a, 253b may be provided in a central location relative to the display 204 to facilitate image acquisition of a face. For example, front facing cameras 253a, 253b may be located centrally above the display 204.

Rear facing cameras are provided by cameras 253a, 253b which are located to obtain images of a subject near a rear face of the electronic device 201. The rear face is typically a face which does not include the main display 204 of the electronic device 201. In at least some embodiments, the electronic device 201 may operate in an operating mode in which the display 204 acts as a viewfinder displaying images associated with camera data obtained at one or both of the rear facing cameras.

The rear facing cameras may obtain images which are not within the field of view of the front facing cameras. The field of view of the front facing and rear facing cameras may generally be in opposing directions.

While FIG. 1 illustrates two cameras (a first camera 253a and a second camera 253b), the electronic device 201 may include more than two cameras 253a, 253b. For example, in at least some example embodiments, the electronic device 201 may include both front facing cameras and rear facing cameras.

In at least some example embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable or Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 stores data 227 in an erasable persistent memory, which in one example embodiment is the flash memory 244. In various example embodiments, the data 227 includes service data including information used by the electronic device 201 to establish and maintain communication with the wireless network 101. The data 227 may also include user application data such as email messages, address book and contact information, camera data, calendar and schedule information, notepad documents, image files, and other commonly stored user information stored on the electronic device 201 by its user, and other data. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the memory.

The electronic device 201 may, in at least some example embodiments, be a mobile communication device which may provide two principal modes of communication: a data communication mode and a voice communication mode. In the data communication mode, a received data signal such as a text message, an email message, or a web page download will be processed by the communication subsystem 211 and input to the processor 240 for further processing. For example, a downloaded web page may be further processed by a browser application or an email message may be processed by an email messaging application and output to the display 204. A user of the electronic device 201 may also compose data items, such as email messages, for example, using an input interface 206 in conjunction with the display 204. These composed items may be transmitted through the wireless communication subsystem 211 over the wireless network 101.

In the voice communication mode, the electronic device 201 provides telephony functions and operates as a typical cellular phone. The overall operation is similar to the data communication mode, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in FIG. 1, the software modules 221 include operating system software 223 and other software applications 225.

The software applications 225 on the electronic device 201 may also include a range of additional applications including, for example, a notepad application, internet browser application, a camera application 280, a voice communication (i.e. telephony) application, a mapping application, and/or a media player application, or any combination thereof. Each of the software applications 225 may include layout information defining the placement of particular fields and graphic elements (e.g. text fields, input fields, icons, etc.) in the user interface (e.g. the display 204) according to the application.

The software modules 221 or parts thereof may be temporarily loaded into volatile memory such as the RAM 246. The RAM 246 is used for storing runtime data variables and other types of data or information, as will be apparent. Although specific functions are described for various types of memory, this is merely one example, and it will be appreciated that a different assignment of functions to types of memory could also be used.

A predetermined set of applications that control basic device operations, including data and possibly voice communication applications will normally be installed on the electronic device 201 during or after manufacture. Additional applications and/or upgrades to the operating system 223 or software applications 225 may also be loaded onto the electronic device 201 through the wireless network 101, the auxiliary I/O subsystem 250, the data port 252, the short-range communication subsystem 262, or other suitable device subsystem 264. The downloaded programs or code modules may be permanently installed, for example, written into the program memory (i.e. the flash memory 244), or written into and executed from the RAM 246 for execution by the processor 240 at runtime.

The processor 240 may be electrically connected to the cameras 253a, 253b to allow the processor 240 to receive electronic signals representing camera data from the cameras 253a, 253b.

In at least some embodiments, the software modules 221 may include one or more camera applications 280 or software modules which are configured for handling the electronic signals representing camera data from the cameras 253a, 253b. The camera application 280 may, for example, be configured to provide a viewfinder on the display 204 by displaying, in real time or near real time, images defined in the electronic signals received from the cameras 253a, 253b. The camera application 280 may also be configured to capture images or videos by storing images or videos defined by the electronic signals received from the cameras 253a, 253b. For example, the camera application 280 may be configured to store the images or videos to memory, for example the flash memory 244, of the electronic device 201. The images may be stored in various formats including JPEG, RAW, BMP, etc.

The camera application 280 may also be configured to control options or preferences associated with the cameras 253a, 253b. For example, the camera application 280 may be configured to control camera lens apertures and/or shutter speeds associated with the cameras 253a, 253b. The control of such features may, in at least some example embodiments, be automatically performed by the camera application 280 based on output received from a light exposure meter, or based on the operating mode of the camera application 280 (such as whether the electronic device is operating in a 2-D operating mode or a 3-D operating mode), or based on other criteria.

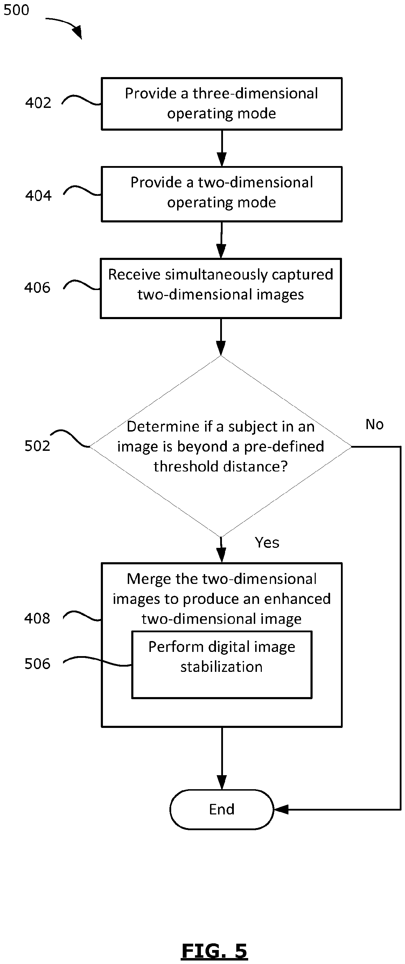

The camera application 280 may, in various embodiments, control any one or more of a number of various camera related features and options. For example, in at least some example embodiments, the camera application 280 may be configured to control a flash associated with the cameras 253a, 253b and/or to control zooms associated with the cameras 253a, 253b. In at least some example embodiments, the camera application 280 is configured to provide digital zoom features. The camera application 280 may provide digital zoom features by cropping an image down to a centered area with the same aspect ratio as the original. In at least some example embodiments, the camera application 280 may interpolate within the cropped image to bring the cropped image back up to the pixel dimensions of the original. The camera application 280 may, in at least some example embodiments, provide image stabilization for the cameras 253a, 253b. Image stabilization may reduce blurring associated with movement of the cameras 253a, 253b. For example, as will be discussed in greater detail below with reference to FIG. 5, in some embodiments, the camera application 280 may automatically decrease the shutter speeds of the cameras 253a, 253b in response to receiving a selection of a digital image stabilization feature. Doing so, may allow the electronic device to obtain an image which is stabilized. For example, if the cameras 253a, 253b were previously operating at shutter speeds of 0.1 seconds, the shutter speeds of the cameras may be automatically configured to 0.01 seconds when a user instructs the camera to begin performing digital image stabilization.

In at least some embodiments, the camera application 280 may be configured to focus the cameras 253a, 253b on a subject (i.e. an identifiable item, such as an individual or thing). More particularly, the camera application 280 may be configured to control actuators of the cameras 253a, 253b to move lenses (a lens may be comprised of one or more lens elements) in the cameras 253a, 253b relative to image sensors in the cameras 253a, 253b (i.e. vary the focus distance of the cameras 253a, 253b). The focus distance is a measure of the strength of convergence (or divergence) of light for magnification, and may be the distance between the image sensor and the lenses). For example, when capturing images of subjects which are very far from the cameras 253a, 253b, the camera application 280 may control the actuators to cause the actuators to move the lenses away from the image sensors (i.e. increase the focus distance to magnify the subject).

In at least some embodiments, the camera application 280 may provide for auto-focusing capabilities. For example, the camera application 280 may analyze received electronic signals to determine whether the images captured by the cameras 253a, 253b are in focus. That is, the camera application 280 may determine whether the images defined by electronic signals received from the cameras 253a, 253b are focused properly on the subject of such images. The camera application 280 may, for example, make this determination based on the sharpness of such images. If the camera application 280 determines that the images are not in focus, then the camera application 280 may cause the processor 240 to adjust one or more of the actuators which controls the lenses to focus the images.

In at least some example embodiments, the camera application 280 may allow the cameras 253a, 253b to be operated in a variety of operating modes. In some example embodiments, the camera application 280 may be configured to operate in a non-enhanced 2-D operating mode. In the non-enhanced 2-D operating mode, the camera application 280 may configure only one of the cameras 253a, 253b to capture a 2-D image. For example, the camera application 280 may configure the first camera 253a to capture a 2-D image for display. That is, in the non-enhanced 2-D operating mode, only one camera captures an image at any given time. For example, only the first camera 253a may capture a 2-D image while the second camera 253b does not capture any images.

In at least some example embodiments, the camera application 280 may include one or more operating modes which allow for simultaneous operation of the cameras 253a, 253b.

For example, the camera application 280 may provide an enhanced two-dimensional (2-D) operating mode. In this operating mode, the cameras 253a, 253b may cooperatively capture 2-D images. For example, each of the cameras 253a, 253b may capture a 2-D image at the same time. In such example embodiments, the camera application 280 may be configured to process electronic signals representing images captured by the cameras 253a, 253b to combine the images and produce an enhanced 2-D image. For example, the camera application 280 may merge the captured 2-D images to produce an enhanced 2-D image.

Accordingly, the enhanced 2-D operating mode may allow the cameras 253a, 253b to simultaneously capture images. For example, a user may input an instruction to the electronic device 201 via an input interface 206 instructing the electronic device 201 to capture an enhanced 2-D image. In response, the electronic device 201 may simultaneously capture an image using both the first camera 253a and the second camera 253b. The images may be captured at the same time or approximately the same time by the cameras 253a, 253b. These images may be combined to produce an enhanced 2-D image.

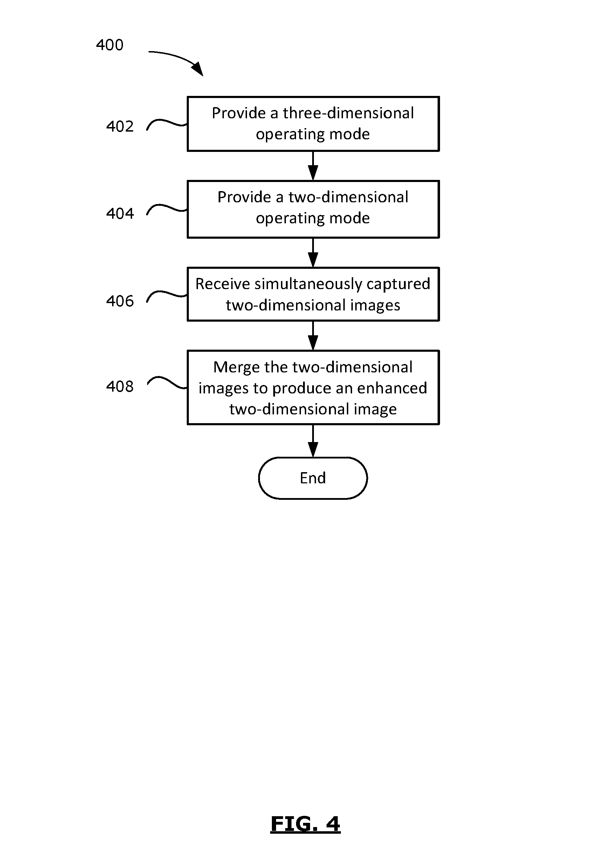

Accordingly, while operating in the enhanced 2-D operating mode, the camera application 280 may receive simultaneously captured 2-D images from the first camera 253a and the second camera 253b. The camera application 280 may then merge the 2-D images to produce an enhanced 2-D image. The enhanced 2-D image may include an enhanced effect. For example, the enhanced 2-D image may be any one or more of: a digitally stabilized image, an extended depth of field image, a high dynamic range image or a background out-of-focus image. Specific functions and features of the camera application 280, including these various image types, will be discussed in greater detail below with reference to FIGs. 4 to 8.

Two dimensional images (non-stereoscopic images) obtained through either the enhanced 2-D operating mode and/or the non-enhanced 2-D operating mode may be displayed on the display 204 without a stereoscopic effect. That is, such two dimensional images may be displayed using traditional 2-D display techniques.

In some example embodiments, the camera application 280 may provide a three dimensional (3-D) operating mode. In this operating mode, the cameras 253a, 253b may collectively capture stereoscopic image data. In such example embodiments, the camera application 280 may be configured to process electronic signals of images captured by cameras 253a, 253b for stereoscopic display. That is, the camera application 280 may analyze stereoscopic images defined by the electronic signals received from the cameras 253a, 253b.

In some example embodiments, in the 3-D operating mode the camera application 280 may be configured to display an image obtained from the first camera 253a and an image obtained from the second camera 253b separately to a left eye and a right eye of a user viewing the display 204 (i.e. to display a 3-D image).

The camera application 280 may be configured to display stereoscopic images defined by stereoscopic image data to a user via the display 204 to achieve a stereoscopic effect. The camera application 280 may employ any one of a number of stereoscopic display techniques in order to achieve the stereoscopic effect. For example, an image from the first camera 253a may be displayed to only the left eye of the user and an image from the second camera 253b may be displayed to only the right eye of the user. The offset between the images may provide information to the brain of a user to give the perception of depth when the images are combined (i.e. stereoscopic images), and viewed by the user. While the embodiment discussed above includes a processor 240 coupled with a camera application 280 which collectively act as an image signal processor to provide image related functions such as auto-focusing, in other example embodiments (not shown), another processor such as a dedicated image signal processor, may provide some or all of these functions. That is, an image signal processor may be configured to perform the functions of the camera application 280 or a portion thereof.

In at least some example embodiments, the operating system 223 may perform some or all of the functions of the camera application 280. In other example embodiments, the functions or a portion of the functions of the camera application 280 may be performed by one or more other applications. For example, in at least some embodiments, a merging function (which will be described below in greater detail with reference to FIGs. 4 to 8) may be performed within an image editing application (not shown). The image editing application may be an application which allows a user to edit an image. The image editing application may contain processor executable instructions which, when executed, cause the processor 240 to perform merging of images.

Further, while the camera application 280 has been illustrated as a standalone application, in at least some example embodiments, the functions of the camera application 280 may be provided by a plurality of software modules. In at least some example embodiments, these software modules may be divided among multiple applications.

### Example Smartphone Electronic device

As discussed above, the electronic device 201 may take a variety of forms. For example, in at least some example embodiments, the electronic device 201 may be a smartphone.

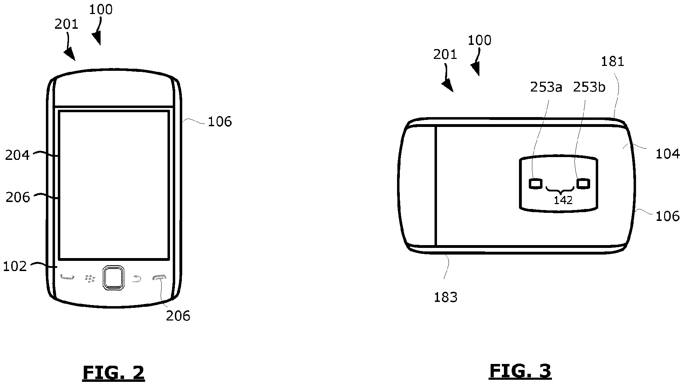

Referring now to FIG. 2, a front view of an example electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone 100.

The smartphone 100 may include the components discussed above with reference to FIG. 1 or a subset of those components. The smartphone 100 includes a housing 106 which houses at least some of the components discussed above with reference to FIG. 1.

In the example embodiment illustrated, the smartphone 100 includes a display 204, which may be a touchscreen display which acts as an input interface 206. The display 204 is disposed within the smartphone 100 so that it is viewable at a front side 102 of the smartphone 100. That is, a viewable side of the display 204 is disposed on the front side 102 of the smartphone. In the example embodiment illustrated, the display 204 is framed by the housing 106.

The example smartphone 100 also includes other input interfaces 206 such as one or more buttons, keys or navigational input mechanisms. In the example embodiment illustrated, at least some of these additional input interfaces 206 are disposed for actuation at a front side 102 of the smartphone.

Referring now to FIG. 3, the example smartphone 100 also includes rear facing cameras 253a, 253b on a rear side 104 of the smartphone 100. That is, the rear facing cameras 253a, 253b are located on a side of the smartphone 100 which does not include the display 204. The rear facing cameras 253a, 253b may include a first camera 253a and a second camera 253b (as also illustrated in FIG. 1).

The rear facing cameras may be located on a central axis of the smartphone 100 which is located midway between a top side 181 and a bottom side 183 of the electronic device 201 when the electronic device 201 is held in a landscape orientation where its width is longer than its height. The rear facing cameras 253a, 253b are located so that they may capture images of subjects which are located in the rear of the electronic device 201 and/or surrounding the rear side 104 of the electronic device 201. In at least some example embodiments, the electronic device 201 may operate in an operating mode in which the display 204, on the front side 102 of the electronic device 201, acts as a viewfinder displaying image data associated with the rear facing cameras 253a, 253b on the rear side 104 of the electronic device 201.

The rear facing cameras 253a, 253b are spaced apart by a distance 142 in order to capture stereoscopic images. In at least some example embodiments, the distance 142 between the rear facing cameras 253a, 253b is greater than the distance 142 illustrated in FIG. 3. For example, the first camera 253a may be located at one end of the rear side 104 (e.g. the leftmost end illustrated in FIG. 3) of the electronic device 201 and the second camera 253b may be located at the other end of the rear side 104 of the electronic device 201 (e.g. the rightmost end illustrated in FIG. 3). A greater distance between the cameras 253a, 253b may allow for the capture of stereoscopic images that produce an enhanced effect of stereoscopy for a user of the electronic device 201.

In at least some example embodiments, the smartphone 100 may also include one or more front facing cameras instead of, or in addition to, the rear facing cameras 253a, 253b. The front facing cameras may be located on the front side 102 of the smart phone 100. The front facing cameras are located so that they may capture images of subjects which are located in front of and/or surrounding the front side 102 of the smartphone 100.

### Producing an Enhanced 2-D Image

Reference will now be made to FIGs. 4 to 8 in which example methods 400, 500, 600, 700, 800 of producing an enhanced 2-D image are illustrated in flowchart form. The electronic device 201 may be configured to perform any one of more of the methods 400, 500, 600, 700, 800 of FIGs. 4 to 8. In at least some example embodiments, the processor 240 of the electronic device 201 is configured to perform one or more of the methods 400, 500, 600, 700, 800 of FIGs. 4 to 8. One or more applications 225 or modules on the electronic device 201 may contain computer readable instructions which cause the processor 240 of the electronic device 201 to perform any one or more of the methods 400, 500, 600, 700, 800 of FIGs. 4 to 8. In at least some example embodiments, the camera application 280 stored in memory of the electronic device 201 is configured to perform one or more of the methods 400, 500, 600, 700, 800 of any one or more of FIGs. 4 to 8. More particularly, the camera application 280 may contain computer readable instructions which, when executed, cause the processor 240 to perform the methods 400, 500, 600, 700, 800 of FIGs. 4 to 8. It will be appreciated that the methods 400, 500, 600, 700, 800 of FIGs. 4 to 8 may, in at least some example embodiments, be provided by other software applications 225 or modules apart from those specifically discussed above; for example the operating system 223. Accordingly, any features which are referred to as being performed by the electronic device 201 may be performed by any one or more of the software applications 225 or modules referred to above or other software modules.

In at least some example embodiments, a portion of one or more of the methods 400, 500, 600, 700, 800 of FIGs. 4 to 8 may be performed by or may rely on other applications 225, modules or devices. For example, in some example embodiments, an image editing application may be configured to perform any one or more of the methods 400, 500, 600, 700, 800 of FIGs. 4 to 8. That is, an image editing application may contain computer readable instructions which, when executed, cause the processor 240 to perform any one or more of the methods 400, 500, 600, 700 of FIGs. 4 to 8.

Referring to FIG. 4, a flowchart of an example method 400 of producing an enhanced 2-D image is illustrated. At 402, the electronic device 201 provides a 3-D operating mode in which stereoscopic images are obtained using a first camera 253a and a second camera 253b. That is, in the 3-D operating mode, the electronic device 201 obtains stereoscopic image data from the cameras 253a, 253b. The stereoscopic image data is obtained by capturing image data from the cameras 253a, 253b at the same time or approximately the same time. The stereoscopic image data represents a stereoscopic image (i.e. an image which may be displayed to provide a stereoscopic effect). In the 3-D operating mode, a stereoscopic image obtained from the cameras 253a, 253b may be stored on memory of the electronic device in a stereoscopic format.

In the 3-D operating mode, the electronic device 201 may be configured to process images captured by cameras 253a, 253b for stereoscopic display. That is, the camera application 280 may analyze stereoscopic image data received from the cameras 253a, 253b.For example, in the 3-D operating mode, the electronic device 201 may be configured to display an image obtained from the first camera 253a and an image obtained from the second camera 253b separately to a left eye and a right eye of a user viewing the display 204. For example, an image from the first camera 253a may be displayed to only the left eye of the user and the image from the second camera 253b may be displayed to only the right eye of the user. The offset between the images may provide information to the brain of a user to give the perception of depth when the images are combined (i.e. stereoscopic images), and viewed by the user.

Accordingly, in the 3-D operating mode, the electronic device 201 may be configured to display stereoscopic images defined by stereoscopic image data to a user via the display 204 to achieve a stereoscopic effect. The electronic device 201 may employ any one of a number of stereoscopic display techniques in order to achieve the stereoscopic effect. Details of example stereoscopic display techniques that may be employed by the electronic device 201 are discussed in greater detail above.

In at least some example embodiments, in the 3-D operating mode, the electronic device 201 configures the first camera 253a to operate simultaneously with the second camera 253b. For example, in response to receiving an instruction to capture a stereoscopic image within the 3-D operating mode, the first camera 253a and the second camera 253b may be triggered to capture an image simultaneously. That is, the first camera 253a captures an image at the same time or approximately the same time as the second camera 253b captures an image.

In at least some example embodiments, the 3-D operating mode may be selected in response to receiving an instruction to enable the 3-D operating mode. The instruction may be received, for example, from an input interface 206 associated with the electronic device 201. For example, the instruction may be received from a navigational input device, such as a trackball, a track pad or a touchscreen display, or a physical keyboard associated with the electronic device 201 to instruct the electronic device 201. In response to receiving such an instruction, the electronic device 201 may provide the 3-D operating mode (e.g. 402 may be performed in response to receiving an instruction to enable the 3-D operating mode).

At 404, the electronic device 201 also provides a 2-D operating mode which may be, for example, an enhanced 2-D operating mode in which an enhanced 2-D image may be produced. In such an operating mode, the electronic device 201 may be configured to process images captured by cameras 253a, 253b to produce an enhanced 2-D image. For example, the electronic device 201 may merge image data received from both of the cameras 253a, 253b to produce an enhanced 2-D image. In such example embodiments, the cameras 253a, 253b capture 2-D images. That is, the first camera 253a captures one or more 2-D images and the second camera 253b captures one or more 2-D images and these 2-D images are combined to produce an enhanced 2-D image.

Selection of the 2-D operating mode may be made similar to the selection to the 3-D operating mode. That is, a 2-D operating mode (such as the enhanced 2-D operating mode) may be selected in response to receiving an instruction to enable the 2-D operating mode (such as an instruction to enable the enhanced 2-D operating mode). The instructions may be received, for example, from an input interface 206 associated with the electronic device 201. For example, the instruction may be received from a navigational input device, such as a trackball, a track pad or a touchscreen display, or a physical keyboard associated with the electronic device 201.

The electronic device 201 may provide other operating modes for operating the cameras 253a, 253b not specifically discussed herein.

At 406, while operating within a 2-D operating mode (i.e. the enhanced 2-D operating mode), the electronic device 201 receives simultaneously captured 2-D images from the first camera 253a and the second camera 253b. That is, the received 2-D images are captured at the same time by the first camera 253a and the second camera 253b. For example, the first camera 253a captures one or more 2-D images at the same time that the second camera 253b captures one or more 2-D images (i.e. the first camera 253a operates simultaneously that the second camera 253b to capture 2-D images). In at least some example embodiments, there may be a small time difference between the capture of the 2-D images by the first camera 253a and the capture of the 2-D images by the second camera 253b. That is, the first camera 253a and the second camera 253b operate substantially simultaneously. The time lag between image capture for the first camera 253 and the second camera 253b is short to ensure that the images captured by both cameras represent common scenes. The duration of time lag which will produce such common scenes will depend on the amount of motion occurring within the field of view of the cameras 253a, 253b. Where there is little or no motion, then the time lag which will produce common scenes may be longer.

In at least some example embodiments, the 2-D image data may be received in response to a receipt of an instruction to capture a 2-D image. The instruction may be received, for example, from an input interface 206 associated with the electronic device 201. For example, the instruction may be received from a navigational input device, such as a trackball, track pad or touchscreen display or a physical keyboard associated with the electronic device 201. The instruction is, in at least some embodiments, an instruction to capture an enhanced 2-D image. The instruction may be an instruction to capture an enhanced 2-D image of a specific type. For example, the instruction may be an instruction to produce an enhanced 2-D image having: digital image stabilization, extended depth of field, high dynamic range, and/or background out-of-focus. These various types of enhanced 2-D images will be described in greater detail below with reference to FIGs. 5 to 8. The instruction may be an instruction to produce an enhanced 2-D image of a type not specifically listed above in other embodiments.

Based on the type of enhanced 2-D image to be produced, the electronic device 201 may accordingly configure control options associated with the cameras 253a, 253b. For example, the electronic device 201 may change the focus distances, shutter speeds and/or the exposure levels of the cameras 253a, 253b based on the type of the enhanced 2-D image which is to be produced.

In some example embodiments, at 406, the electronic device 201 may receive the 2-D images from memory; for example from flash memory 244 of the electronic device 201. For example, the electronic device 201 may retrieve the 2-D images from the data area 227 of memory. In such example embodiments, the 2-D images may have been stored in memory of the electronic device 201 after they were captured by the first camera 253a and the second camera 253b.

After receiving the 2-D images, the electronic device 201, at 408, may merge the captured 2-D images to produce an enhanced 2-D image. The merging function performed by the electronic device 201 may be based on the type of enhanced 2-D image to be produced. For example, the merging function may perform any one or more of: digital image stabilization, extended depth of field, high dynamic range, and/or background out of focus to produce an enhanced 2-D image. Other types of merging functions may be performed in other embodiments.

The enhanced 2-D image incorporates features produced by the merging function, and may include different aesthetic features than each of the 2-D images captured by the first camera 253a and the second camera 253b. For example, if the merging function performs digital image stabilization, the produced enhanced 2-D image is brighter or less noisy than the 2-D images captured by the first camera 253a and the second camera 253b.

Greater details of the merging function are provided below with reference to FIGs. 5 to 8.

In at least some example embodiments, the enhanced 2-D image may be stored in the memory; for example the flash memory 244, of the electronic device 201.

The electronic device 201, in at least some example embodiments, may display the enhanced 2-D image. The enhanced 2-D image may be displayed on the display 204 of the electronic device 201. When displayed, the enhanced 2-D image may occupy the complete display 204 or may occupy a portion of the display 204. The enhanced 2-D image is displayed as a 2-D image.

After merging, in at least some example embodiments, the electronic device 201, may discard the captured 2-D images by the first camera 253a and the second camera 253b. For example, in at least some example embodiments, the electronic device 201 may permanently remove the captured 2-D images from the electronic device 201. That is, the captured 2-D images may no longer be retrievable by a user of the electronic device 201. In such example embodiments, if the captured 2-D images are already stored in the electronic device 201 (for example, in the memory of the electronic device 201) prior to merging the captured 2-D images, the electronic device 201 may permanently delete the captured 2-D from the electronic device 201. That is, after having used the captured 2-D images for merging, the captured 2-D images may be discarded to save space on the electronic device 201.

In other embodiments, the electronic device 201 may not discard the captured 2-D images. In at least some example embodiments, the captured 2-D images may be stored in the memory of the electronic device 201 (if the captured 2-D images are not already stored in the electronic 201). That is, the captured 2-D images may be retrievable by a user of the electronic device 201.

### Merging the 2-D Images

As noted above, after the electronic device 201 receives simultaneously captured 2-D images from the first camera 253a and the second camera 253b, the 2-D images may be merged to produce an enhanced 2-D image. In at least some example embodiments, merging may include: performing digital image stabilization, providing an extended depth of field, providing a high dynamic range and/or performing background out-of-focussing. Examples of such merging features and their effects will now be described.

Referring now to FIG. 5, a flowchart of an example method of producing an enhanced 2-D image is illustrated. In the example method 500, digital image stabilization is performed to produce the enhanced 2-D image. That is, the enhanced 2-D image is a digitally stabilized image.

Digital image stabilization is concerned with correcting the effects of the unwanted motions that take place during the exposure time of an image or video frame. An image sensor of a camera has an image projected on it for a period of time called the exposure time, before capturing the image. The exposure time of a camera may be varied depending on the preferences of a user, as varying the exposure time may change the aesthetic features of the captured image. The longer the exposure time, the more susceptible the image sensor is to the effects of unwanted motions. The unwanted motions, for example, may be caused by a user's hand shaking when capturing an image. These motions cause a shift of the image projected on the image sensor resulting in a degradation of the captured image in the form of blurring.

The method 500 of FIG. 5 may, in at least some embodiments, be used to produce a digitally stabilized image. That is, the method 500 may be used to produce a 2-D image that suffers less from such unwanted motions.

The method 500 illustrated at FIG. 5 includes, at 402, providing a 3-D operating mode in which stereoscopic images are obtained using a first camera 253a and a second camera 253b. The method, at 404, also provides a 2-D operating mode. The 3-D operating mode of 402 and the 2-D operating mode of 404 are discussed in greater detail above with reference to FIG. 4.

In at least some example embodiments, the 2-D operating mode is an enhanced 2-D operating mode (i.e. a mode in which an enhanced 2-D image may be produced). That is, the electronic device 201 is enabled to perform digital image stabilization to produce an enhanced 2-D image. The electronic device 201 may, for example, perform digital image stabilization in response to receiving a user input instructing the electronic device 201 to perform digital image stabilization. For example, a user may be provided with one or more options to select one or more features to be performed (such as digital image stabilization, extended depth of field, etc.) to produce the enhanced 2-D image. In such example embodiments, the selection may be received by an input interface 206 (such as a navigational input device) associated with the electronic device 201.

In response to receiving a selection of a digital image stabilization feature, the electronic device 201 may decrease the shutter speeds of the cameras 253a, 253b. For example, the electronic device 201 may configure the cameras 253a, 253b to operate at a lower shutter speed than a previous shutter speed operation (or setting) of the cameras 253a, 253b. For example, if the cameras 253a, 253b were previously operating (or set) at shutter speeds of 0.1 seconds, the shutter speeds of the cameras may be configured to 0.01 seconds.

The shutter speed represents the length of time that the shutter of a camera remains open when capturing an image. The shutter speed is related to the exposure time (i.e. the duration of light reaching an image sensor of a camera). For example, the shorter the shutter speed, the shorter the exposure time, and the longer the shutter speed, the longer the exposure time. The shutter speed also changes the way movement appears in an image. For example, a shorter shutter speed may be used to capture a moving subject as a still frame, while a longer shutter speed may capture the moving subject having a blurry effect.

Accordingly, in some example embodiments, the electronic device 201 may automatically decrease the shutter speeds of the cameras 253a, 253 in response to receiving a selection of a digital image stabilization feature. A selection of the digital image stabilization feature may configure the electronic device 201 to automatically decrease the shutter speeds of both the cameras 253a, 253b.

At 406, while operating within the 2-D operating mode, the electronic device 201 receives simultaneously captured 2-D images from the first camera 253a and the second camera 253b. The 2-D images may be received in the same manner as discussed above with reference to FIG. 4. In at least some embodiments, at 406, the 2-D images are received in response to the receipt of an instruction (e.g. from an input interface 206) instructing the electronic device to capture an image using digital image stabilization.

In at least some example embodiments, at 406, the electronic device 201 may receive multiple 2-D images from each of the first camera 253a and the second camera 253a. For example, the electronic device 201 may receive a plurality of 2-D images from both cameras 253a, 253b. That is, the first camera 253a captures a plurality of 2-D images, and the second camera 253b captures a plurality of 2-D images. At least some of these images may be simultaneously captured.

In some embodiments, the electronic device 201 may only perform digital image stabilization on the 2-D images if one or more predetermined criteria are met. For example, since the cameras 253a, 253b are separated by a distance, when images are captured on a subject that is very close to the cameras, images from each of the cameras 253a, 253b may be too different from one another to be combinable. Accordingly, in some embodiments, after receiving the 2-D images, at 502, the electronic device 201 determines if a subject in the 2-D images is beyond a pre-defined threshold distance from the first camera 253a and the second camera 253b. The pre-defined threshold distance is a distance in which the subject is considered to be far enough away from the cameras 253a, 253b for the merging to produce good results.

At 408, the electronic device 201 merges the 2-D images to produce an enhanced 2-D image. In the method 500 of FIG. 5 such merging includes, at 506, performing digital image stabilization to obtain an enhanced 2-D image which is brighter or less noisy than the 2-D images captured by the first camera 253a and the second camera 253b. For example, in at least some example embodiments, the received 2-D images are combined when performing digital image stabilization to produce an enhanced 2-D image that is brighter than the 2-D images captured by the cameras 253a, 253b. In at least some example embodiments, the received 2-D images are averaged when performing digital image stabilization to produce an enhanced 2-D image that is less noisy than the 2-D images captured by the cameras 235a, 253b.

In embodiments in which multiple two-dimensional images are obtained from each of the first camera and the second camera, the multiple two-dimensional images may be used in the merging. That is, in at least some embodiments, the merging may use more than one set of simultaneously captured images. In some embodiments, two or more pairs of simultaneously captured images may be used in the merging to produce a single enhanced 2-D image. In at least some embodiments, 408 may only be performed if the subject is determined (at 502) to be far enough away from the cameras 253a, 253b for the merging to produce good results.

The digital image stabilization corrects for blurring to produce an enhanced 2-D image. The enhanced 2-D image is brighter or less noisy than the captured 2-D images. For example, the subject in the enhanced 2-D image may be brighter or less noisy than the subject in the captured 2-D images. The enhanced 2-D image which is brighter or less noisy may be considered more aesthetically pleasing than the captured 2-D images.

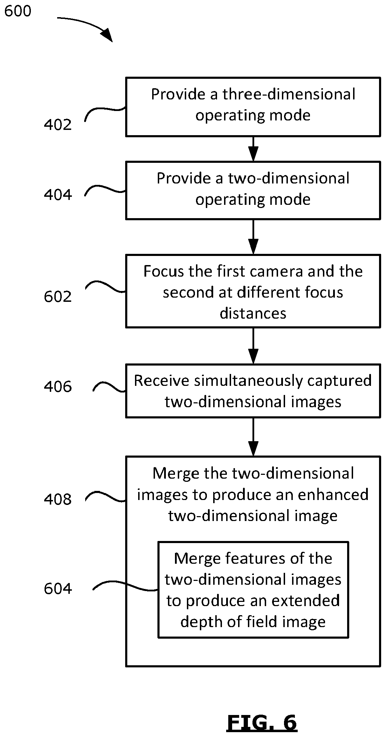

Reference is next made to FIG. 6, which illustrates a flowchart of another example method 600 of producing an enhanced 2-D image. The example method 600 may be used to produce an enhanced 2-D image having an extended depth of field.

Depth of field is the distance between the nearest and the farthest portions in an image that appear acceptably sharp. The depth of field of an image is dependent on the distance between the camera and the subject, and the focus distance of the camera capturing the image. These factors define the level of subject magnification. The depth of field is inversely proportional to the level of magnification. For example, increasing the magnification by either moving the camera closer to the subject or increasing the focus distance by adjusting the lenses decreases the depth of field. That is, the more magnified an image, the shorter the depth of field (i.e. the smaller the portion of the image that is sharp). When an image is taken in two different format sizes from the same distance and the same focus distance, and the final images are the same size, the smaller format has a greater depth of field. In some examples, it may be desirable to have the entire image sharp and as such, a large depth of field is appropriate (i.e. an extended depth of field). In some examples, it may be desirable to focus on two subjects at different distances and, an extended depth of field may allow such focusing. In other examples, it may be desirable to emphasize the subject while de-emphasizing the background (i.e. the remaining portions of the image), and as such, a small depth of field is appropriate.

The method 600 illustrated at FIG. 6 includes, at 402, providing a 3-D operating mode in which stereoscopic images are obtained using a first camera 253a and a second camera 253a, and at 404 also providing a 2-D operating mode. These operating modes of 402 and 404 are discussed in greater detail above with reference to FIG. 4.

At 602, the electronic device 201 focuses the first camera 253a and the second camera 253b at different focus distances. For example, the electronic device 201 may configure the cameras 253a, 253b to operate at different focus distances to capture images. That is, the first camera 253a has a different focus distance than the second camera 253b. In at least some example embodiments, the electronic device 201 may control actuators associated with the cameras to move lenses in each of the cameras 253a, 253b relative to image sensors in the cameras 253a, 253b. Varying the distances between the lenses and the image sensor changes the focus distance of the cameras 253a, 253b when capturing images. Moving the lenses further away from the image sensor, increases the focus distance of the cameras 253a, 253b, while moving the lenses closer to the image sensor decreases the focus distance of the cameras 253a, 253b.

The cameras 253a, 253b may have a median distance for the focus distance at which subjects in images captured at that focus distance appear the same distance as viewed by an individual's eyes. Subjects in images captured at a focus distance less than the median distance (i.e. a short focus distance) may appear at a distance further than viewed by an individual's eyes, while subjects in images captured at a focus distance more than the median distance (i.e. a long focus distance) may appear at a distance closer than viewed by an individual's eyes. That is, subjects in images captured at a short focus distance are less magnified than subjects in images captured at a long focus distance (i.e. the focus distance at which subjects are captured is proportional to the level of magnification of the subjects).

In at least some example embodiments, the electronic device 201 may set one camera to a short focus distance and the other camera to a long focus distance. For example, the electronic device 201 may configure the first camera 253a to have a long focus distance, and may configure the second camera 253b to have a short focus distance. That is, the first camera 253a captures images at a long focus distance and the second camera captures images at a short focus distance.

The cameras 253a, 253b may be set to operate at varying focus distances either manually or automatically. For example, in at least some example embodiments, a user may instruct each of the cameras 253a, 253b to operate at varying focus distances. That is, a user may send an instruction, via an input interface 206, to set the cameras 253a, 253b to capture images at different focus distances. In at least some example embodiments, the electronic device 201 may automatically configure the cameras 253a, 253b to operate at varying focus distances. In such example embodiments, the electronic device 201 may automatically set the cameras 253a, 253b to operate at different focus distances in response to an instruction to obtain an image having an extended depth of field. For example, within the 2-D operating mode, a user may be provided an option to select one or more features to be performed (such as digital image stabilization, extended depth of field, etc.) to produce the enhanced 2-D image. A selection of the extended depth of field feature may configure the electronic device 201 to automatically set the cameras 253a, 253b to capture images at different focus distances.

At 406, while operating within the 2-D operating mode, the electronic device 201 receives simultaneously captured 2-D images from the first camera 253a and the second camera 253b. The 2-D images may be received in the same manner as discussed above with reference to FIG. 4.

At 408, the electronic device 201 merges the 2-D images to produce an enhanced 2-D image. In the illustrated example embodiment, merging includes, at 604, merging features of a 2-D image from the first camera 253a with features of a 2-D image from the second camera 253b to produce an extended depth of field image. That is, the electronic device 201 combines features of the 2-D images captured at varying focus distances to produce an extended depth of field image.

In at least some example embodiments, the electronic device 201 may combine the sharpest features of the 2-D images captured by the first camera 253a and the sharpest features of the 2-D images captured by the second camera 253b. For example, images captured by the first camera 253a at a long focus distance may have a sharper subject than in the images captured by the second camera 253a at a short focus distance, while the images captured by the second camera 253a at a short focus distance may have a sharper background than in the images captured by the first camera 253a at a long focus distance. The electronic device 201 may then combine the subject in the images captured by the first camera 253a with the background in the images captured by the second camera 253b to produce an extended depth of field image. The extended depth of field image is sharper than the 2-D images captured by the cameras 253a, 253b. Similarly, in some embodiments, the image from the first camera may be focused on a first subject while the image from the second camera may be focused on a second subject. The enhanced 2-D image may be obtained by combining the portion of the image from the first camera which includes the first subject and the portion of the image from the second camera which includes the second subject.

In at least some example embodiments, in performing merging, the electronic device 201 may crop portions of the images captured by the first camera 253a and/or portions of the images captured by the second camera 253b. The cropped portions are then combined to produce the extended depth of field image (cropping may include accentuating a specific portion of an image and removing portions of the image surrounding the specific portion). In such example embodiments, the electronic device 201 may crop the sharpest portions of the images captured by the first camera 253a and the images captured by the second camera 253b. The cropped portions are then combined to produce an extended depth of field image. For example, the electronic device 201 may crop a subject of the images captured by the first camera 253a at a short focus distance and a background of the images captured by the second camera 253b at a long focus distance. The cropped subject and background are then combined to produce an extended depth of field image that is sharper than the 2-D images captured by the cameras 253a, 253b.

In at least some embodiments, 408 (and 604) may only be performed if one or more predetermined criteria are met. For example, if the subject in the 2-D images is determined (for example, in the manner described above with reference to 502) to be far enough away from the cameras 253a, 253b (i.e. beyond a pre-defined threshold distance) for the merging to produce good results.

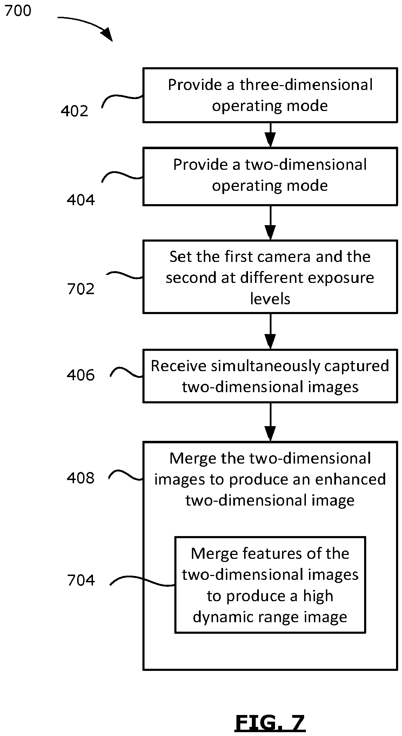

Reference is next made to FIG. 7, which is a flowchart of another example method 700 of producing an enhanced 2-D image. The example method 700 may be used to obtain an enhanced 2-D image having a high dynamic range.

High dynamic range imaging is a set of techniques that allows a greater dynamic range (i.e. luminance range) between the lightest and darkest areas of an image. This high dynamic range allows images with high dynamic range features to represent more accurately the range of intensity levels found in an image, especially in the brightest and darkest areas of the image. High dynamic range is geared towards representing more contrast in pictures. For example, images without high dynamic range features have a limited contrast range. This results in a loss of detail in the bright and dark areas of an image. High dynamic range imaging compensates for this loss in detail by combing multiple images captured at varying exposure levels and combing them to produce a high dynamic range image that is representative of details in the bright and dark areas of the image.

The method 700 illustrated at FIG. 7 includes, at 402, providing a 3-D operating mode in which stereoscopic images are obtained using a first camera 253a and a second camera 253a, and at 404 also providing a 2-D operating mode. These operating modes of 402 and 404 are discussed in greater detail above with reference to FIG. 4.

At 702, the electronic device 201 sets the first camera 253a and the second camera 253b at different exposure levels. For example, the electronic device 201 may configure the cameras 253a, 253b to operate at different exposure levels to capture images. That is, the first camera 253a has a different exposure level than the second camera 253a.

The exposure level of a camera is dependent upon the exposure time and the illuminance at the image sensor of the camera. As noted above, the exposure time may be controlled by the shutter speed of the camera. For example, a shorter shutter speed has a lower exposure time while a longer shutter speed has a higher exposure time. Images captured at a lower exposure time may appear darker than images captured at a higher exposure time. The illuminance may be controlled by the lens aperture of the camera and the scene luminance. The lens aperture may control the amount of light reaching the image sensor by varying the lens aperture size. For example, a narrower lens aperture may have less illuminance while a wider lens aperture may have more illuminance. Images captured at less illuminance may appear darker than images captured at more illuminance. The scene luminance may depend on the level of surrounding lighting.

In at least some example embodiments, the electronic device 201 may control the shutter speeds and the lens aperture size to vary the exposure levels of the cameras 253a, 253b. For example, the electronic device 201 may configure the first camera 253a to have a short shutter speed and/or a narrow lens aperture, and may configure the second camera 253b to have a long shutter speed and/or a wide lens aperture. That is, the first camera 253a captures images at a low exposure level and the second camera 253b camera captures images at a high exposure level.

In at least some example embodiments, the electronic device 201 may set the exposure level in one camera to capture an under-exposed image, and the other camera to capture an over-exposed image. An under-exposed image has a loss of shadow detail. That is, the dark portions in the image appear indistinguishable from a black colour. An over-exposed image has a loss of highlight detail. That is, the bright portions in the image appear indistinguishable from a white colour. In such example embodiments, the electronic device 201 may, for example, configure the first camera 253a to capture an under-exposed image and the second camera 253b to capture an over-exposed image by varying the shutter speeds and the lens aperture of the cameras 253a, 253b accordingly.

The cameras 253a, 253b may be set to operate at varying exposure levels either manually or automatically. For example, in at least some example embodiments, a user may instruct each of the cameras 253a, 253b to operate at varying exposure levels. That is, a user may send an instruction via an input interface 206 to set the cameras 253a, 253b to capture images at different exposure levels. In at least some example embodiments, the electronic device 201 may automatically configure the cameras 253a, 253b to operate at varying exposure levels. In such example embodiments, the electronic device 201 may automatically set the cameras 253a, 253b to operate at different exposure levels in response to an instruction to obtain a high dynamic range image. For example, within the 2-D operating mode, a user may be provided options to select one or more features to be performed (such as digital image stabilization, extended depth of field, etc.) to produce the enhanced 2-D image. A selection of the high dynamic range feature may configure the electronic device 201 to automatically set the cameras 253a, 253b to capture images at different exposure levels.

At 406, while operating within the 2-D operating mode, the electronic device 201 receives simultaneously captured 2-D images from the first camera 253a and the second camera 253b. The 2-D images may be received in the same manner as discussed above with reference to FIG. 4.

At 408, the electronic device 201 merges the 2-D images to produce an enhanced 2-D image. In such an example embodiment, merging includes, at 704, merging features of a 2-D image from the first camera 253a with features of a 2-D image from the second camera 253b to produce a high dynamic range image. That is, the electronic device 201 may combine features of the different 2-D images captured at varying exposure levels to produce a high dynamic range image.

For example, in at least some example embodiments, the electronic device 201 may combine bright portions in the 2-D images captured at a low exposure level and dark portions in the 2-D images captured at a high exposure level to produce a high dynamic range image. For example, images captured by the first camera 253a at a low exposure level may have a better contrast range at the bright portions of the images, while image captured by the second camera 253b at a high exposure level may have a better contrast range at the dark portions of the images. The electronic device 201 may then combine the bright portions of the images captured by the first camera 253a and the dark portions of the images captured by the second camera 253b to produce a high dynamic range image. The high dynamic range image has a higher contrast range than the 2-D images captured by the cameras 253a, 253b.

In at least some example embodiments, in performing merging, the electronic device 201 may crop portions of the 2-D images captured by the cameras 253a, 253b. The 2-D images captured by the first camera 253a may be offset by a distance 142 from the 2-D images captured by the second camera 253b, as the camera 253a, 253b may be spaced apart by a distance 142. In such example embodiments, portions of the captured 2-D images that do not overlap may be cropped and removed. That is, only the overlapping portions of the captured 2-D images are combined to produce a high dynamic range image. In such example embodiments, the high dynamic range image may have a different panoramic scope than the captured 2-D images.

In at least some embodiments, 408 (and 704) may only be performed if one or more predetermined criteria are met. For example, if the subject in the 2-D images is determined (for example, in the manner described above with reference to 502) to be far enough away from the cameras 253a, 253b (i.e. beyond a pre-defined threshold distance) for the merging to produce good results.

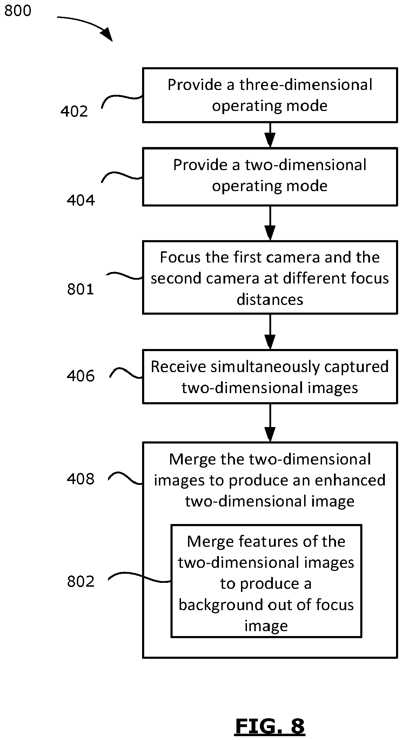

Reference is next made to FIG. 8, which is a flowchart of another example method of producing an enhanced 2-D image. The example method 800 may be used to produce an enhanced 2-D image having a background out-of-focus.

Background out-of-focus involves providing an image in which portions of that image are intentionally out-of-focus. The out-of-focus portions are blurred. The type of blurring of the out-of-focus portions may be controlled, and range from soft to harsh blurring. In a background out-of-focus image, the subject may be in-focus (i.e. sharp) and the background may be out-of-focus (i.e. blurry).

The method 800 as illustrated at FIG. 8 includes, at 402, providing a 3-D operating mode in which stereoscopic images are obtained using a first camera 253a and a second camera 253b, and at 404 also providing a 2-D operating mode. These operating modes of 402 and 404 are discussed in greater detail above with reference to FIG. 4.

At 801, the electronic device 201 focuses the first camera 253a and the second camera 253b at different focus distances. The different focus distances include an in-focus distance and an out-of-focus distance. That is, one camera is configured to one focus distance (which may be referred to as an in-focus distance) and the other camera is configured to another focus distance (which may be referred to as an out-of-focus distance). In at least some example embodiments, the camera which is configured to operate at the in-focus distance may be configured to focus on a subject in images, and the camera which is configured to operate at the out-of-focus distance may be configured to cause a background to appear out-of-focus (i.e. blurred) in images. For example, the first camera 253a may be set at a focus distance to capture a subject in an image sharply while the second camera 253b may be set at a focus distance to capture a background in an image in so that the background appears blurry. Configuration of the focus distances of the cameras 253a, 253b to the in-focus and out-of-focus distances may be performed in a similar manner to that discussed above with reference to 602 of FIG. 6.

At 406, while operating within the 2-D operating mode, the electronic device 201 receives simultaneously captured 2-D images from the first camera 253a and the second camera 253b. The 2-D images may be received in the same manner as discussed above with reference to FIG. 4.

At 408, the electronic device 201 merges the 2-D images to produce an enhanced 2-D image. In the illustrated embodiment, merging includes, at 802, merging features of the features of the 2-D images from the first camera 253a with features of the 2-D images from the second camera 253b to produce a background out-of-focus image. That is, the electronic device 201 combines features of the different 2-D images captured at an in-focus distance and an out-of-focus distance to produce an enhanced 2-D image that is a background out-of-focus image.

In at least some example embodiments, the electronic device 201 may combine a subject in a captured 2-D image from one camera with a background in a captured 2-D images from another camera. For example, the first camera 253a may capture images of a subject at an in-focus distance and the second camera 253b may capture images of a background at an out-of-focus distance. The electronic device 201 may then combine the subject from the image captured at the in-focus distance with the background from the image captured at the out-of-focus distance to produce a background out-of-focus image. The background out-of-focus image may have a sharp subject with a blurry background.

In at least some example embodiments, in performing merging, the electronic device 201 may crop portions of the images captured by the first camera 253a and portions of the images captured by the second camera 253b. The cropped portions are then combined to produce a background out-of-focus image. In such example embodiments, the electronic device 201 may crop a subject in the images captured at an in-focus distance and a background in the images captured at an out-of-focus distance. The cropped portions are then combined to produce a background out-of-focus image. The cropped subject and background are then combined to produce an out-of-focus image that may have a sharp subject with a blurry background.

In at least some example embodiments, in cropping the subject from the captured 2-D images, the electronic device 201 may identify one or more boundaries associated with the in-focus subject in the captured 2-D images. For example, the electronic device 201 may identify the boundaries of a subject (e.g. a person) in the captured 2-D images. The boundaries may, in at least some example embodiments, represent a perimeter of a subject. That is, the boundary may be a continuous line which forms the boundary of a geometric figure (i.e. the subject, such as a person).

In at least some example embodiments, the electronic device 201 may perform edge detection in order to identify one or more boundaries of the in-focus subject in the captured 2-D images. Edge detection is a process of identifying points in an image at which the image brightness has discontinuities. Discontinuities in the image brightness may correspond to discontinuities in depth, illumination, etc. of the image. Identification of the points may result in connecting lines that indicate the boundaries of objects in an image as the boundaries are areas often associated with discontinuities in image brightness in an image.

In at least some example embodiments, after having identified the boundaries associated with a subject from an in-focus image, the electronic device 201 may crop the subject along its identified boundaries. The electronic device 201 may then combine the cropped in-focus subject and a cropped out-of-focus background to produce a background out-of-focus image. In at least some such example embodiments, the electronic device 201 may crop the out-of-focus background based on the identified boundaries of the subject. That is, the electronic device 201 may use the identified boundaries of the subjects to the background from the out-of-focus images. The cropped in-focus subject and out-focus background are then combined to produce a background out-of-focus image.

In at least some embodiments, 408 (and 802) may only be performed if one or more predetermined criteria are met, for example, if the subject in the 2-D images is determined (for example, in the manner described above with reference to 502) to be far enough away from the cameras 253a, 253b (i.e. beyond a pre-defined threshold distance) for the merging to produce good results.

While the present application is primarily described in terms of methods, a person of ordinary skill in the art will understand that the present application is also directed to various apparatus such as an electronic device 201 including a mobile communications device. The electronic device 201 includes components for performing at least some of the aspects and features of the described methods, which may be by way of hardware components (such as the memory 244 and/or the processor 240), software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method implemented by a processor (240) of an electronic device (201), the method comprising:
providing a three-dimensional operating mode in which stereoscopic images are obtained using a first camera (253a) and a second camera (253b); and
providing a two-dimensional operating mode and while operating within the two-dimensional operating mode:
receiving substantially simultaneously captured two-dimensional images from the first camera (253a) and the second camera (253b); and
merging the two-dimensional images to produce an enhanced two-dimensional image.

2. The method of claim 1, wherein merging includes performing digital image stabilization to obtain an enhanced two-dimensional image which is brighter or less noisy than the images captured by the first camera (253a) and the second camera (253b).

3. The method of any one of claims 1 or 2, further comprising:
receiving a selection of a digital image stabilization feature; and
in response to the selection, decreasing shutter speeds of the first camera (253a) and the second camera (253b).

4. The method of any one of claims 1 to 3, wherein receiving substantially simultaneously captured two-dimensional images includes:
receiving multiple two-dimensional images from each of the first camera (253a) and the second camera (253b), and
wherein the multiple two-dimensional images are used in the merging.

5. The method of any one of claims 1 to 4, further comprising, while operating within the two-dimensional operating mode:
prior to merging the two-dimensional images, determining if a subject in the two-dimensional images is beyond a pre-defined threshold distance from the first camera (253a) and the second camera (253b), and
wherein the merging is performed if the subject in the two-dimensional image is beyond the pre-defined threshold distance.

6. The method of any one of claims 1 or 5, further comprising, while operating within the two-dimensional operating mode:
focusing the first camera (253a) and the second camera (253b) at different focus distances, and wherein merging the two-dimensional images includes merging features of the two-dimensional image from the first camera (253a) with features of the two-dimensional image from the second camera (253b) to produce an extended depth of field image.

7. The method of any one of claims 1 or 5, further comprising, while operating within the two-dimensional operating mode:
setting the first camera (253a) and the second camera (253b) at different exposure levels, and wherein merging the two-dimensional images includes merging features of the two-dimensional image from the first camera (253a) with features of the two-dimensional image from the second camera (253b) to produce a high dynamic range image.

8. The method of any one of claims 1 or 5, further comprising, while operating within the two-dimensional operating mode:
focusing the first camera (253a) and the second camera (253b) at different focus distances, the focus distances including an in-focus distance in which a subject of an image is in-focus and an out-of-focus distance in which a background of the image is out-of-focus, and wherein merging the two-dimensional images includes merging features of the image from the first camera (253a) with features of the image from the second camera (253b) to produce a background out-of-focus image.

9. The method of any one of claims 1 to 8, further comprising:
discarding the captured two-dimensional images by the first camera (253a) and the second camera (253b) from the electronic device (201) after merging the two-dimensional images.

10. The method of any one of claims 1 to 9, further comprising:
storing the enhanced two-dimensional image in memory (244) of the electronic device (201).

11. The method of any one of claims 1 to 10, further comprising:
displaying the enhanced two-dimensional image on a display (204) associated with the electronic device (201).

12. An electronic device (201) comprising:
a memory (244);
a display (204);
a first camera (253a) and a second camera (253b); and
a processor (240) coupled to the memory (244), the display (204), the first camera (253a) and the second camera (253b), the processor (240) being configured to perform the method of any one of claims 1 to 11.

13. A computer readable storage medium comprising computer executable instructions, the computer executable instructions including instructions for performing the method of any one of claims 1 to 11.
